# EUROPÄISCHE PATENTSCHRIFT

(11) **EP 0 604 669 B1**
(45) Veröffentlichungstag und Bekanntmachung des Hinweises auf die Patenterteilung: **01.04.1998**
(21) Anmeldenummer: 92114757.5
(22) Anmeldetag: 28.08.1992
(51) Int. Cl.: H04L 12/26, H04L 12/42

(54) **Bussystem mit Ansprechbarkeitsüberwachung der Busteilnehmer**
Bus system with monitoring of the activity state of participants
Système de bus avec surveillance de l'état des participants

(43) Veröffentlichungstag der Anmeldung: 06.07.1994
(73) Patentinhaber: SIEMENS AKTIENGESELLSCHAFT, 80333 München (DE)
(72) Erfinder: Eberl, Gerhard, Dipl.-Infor., W-8458 Sulzbach-Rosenberg (DE); Spichtinger, Klaus, Dipl.-Ing., W-8471 Stulln (DE); Tretter, Bertram, Dipl.-Ing. (FH), W-8415 Nittenau (DE)

(56) Entgegenhaltungen:
- EP-A- 0 139 916
- WO-A-90/14725
- HEWLETT-PACKARD JOURNAL Bd. 41, Nr. 1, Februar 1990, PALO ALTO, CA., US Seiten 67 - 72 J. K. SHAH ET AL. 'Support Features of the HP OSI Express Card'

## Beschreibung

Die vorliegende Erfindung betrifft ein Überwachungsverfahren für die Busteilnehmer eines Bussystems,
- wobei zumindest ein Teil der Busteilnehmer aktivierbar ist,
- wobei in jedem aktivierbaren Busteilnehmer eine Liste mit Informationen zumindest über die anderen aktivierbaren Busteilnehmer geführt wird.

Ein derartiges Verfahren wird beispielsweise bei einem Token Ring angewendet. Dort wird von allen als Busmaster aktivierbaren Busteilnehmern mitgehört, wenn der momentan aktivierte Busteilnehmer den Token an den als nächstes zu aktivierenden Busteilnehmer weitergibt. Wenn dieser Busteilnehmer die Übergabe des Tokens nicht quittiert, wird nach zwei oder drei erfolglosen Versuchen der Token an den als übernächstes zu aktivierenden Busteilnehmer weitergegeben. Dies wird von allen als Busmaster aktivierbaren Busteilnehmern registriert und in der Liste der als Busmaster aktivierbaren Teilnehmer derart vermerkt, daß der Teilnehmer, der den Token nicht quittiert hat, als nicht als Busmaster aktivierbar gekennzeichnet wird.

Nachdem der Token einmal im Token Ring umgelaufen ist, wird erneut versucht, den Busteilnehmer, der beim letzten Umlauf den Token nicht annahm, zu aktivieren. Je nach Ursache der Nichtannahme beim vorherigen Zyklus, z.B. einem kurzzeitigen Spannungseinbruch, quittiert der Teilnehmer nunmehr wieder die Übergabe des Tokens. Auch dies wird in den Busteilnehmern registriert und der betreffende Teilnehmer in den Listen wieder als aktivierbar gekennzeichnet. Die Information, daß ein Teilnehmer zeitweise nicht ansprechbar war, geht also verloren. Andererseits kann es wichtig sein, auch derartige kurzfristige Verbindungsstörungen zu protokollieren.

In der EP-A-0 139 916 ist ein Verfahren für einen Tokenring beschrieben, bei dem für jeden Busteilnehmer derjenige Busteilnehmer gespeichert ist, von dem der aktuelle Busteilnehmer den Token empfängt sowie gleichfalls derjenige Busteilnehmer gespeichert ist, an den der aktuelle Busteilnehmer den Token übergibt. Schlägt entweder die Übernahme von dem den Token übergebenden Busteilnehmer oder die Übergabe an den Token übernehmenden Busteilnehmer fehl, so wird von dem aktuellen Busteilnehmer ein anderer Busteilnehmer ausgewählt, von dem der Token zu empfangen ist bzw. an den der Token zu übergeben ist. Zustandsänderungen der Busteilnhemer bezüglich ihrer Aktivierbarkeit werden nicht erfaßt. Bei mehrfacher, problemloser Tokenübernahme bzw. Tokenübergabe ist es dagegen gemäß der EP-A-0 139 916 vorgesehen, daß zwischen Tokensender und Tokenempfänger ein reduziertes Handshaking-Protokoll ausgeführt wird.

Die Aufgabe der vorliegenden Erfindung besteht also darin, auch kurzzeitige Ansprechbarkeitsstörungen der Busteilnehmer dokumentierbar zu erfassen.

Die Aufgabe wird dadurch gelöst,
- daß die Informationen über die anderen aktivierbaren Busteilnehmer pro anderem aktivierbarem Busteilnehmer zumindest eine Änderungsinformation über eine Zustandsänderung dieses anderen aktivierbaren Busteilnehmers beinhalten,
- daß die Änderungsinformation beim Detektieren der Zustandsänderung dieses anderen aktivierbaren Busteilnehmers gesetzt wird und
- daß die Änderungsinformation erst nach dem Auslesen zumindest der Informationen über diesen anderen aktivierbaren Busteilnehmer, vorzugsweise der ganzen Liste, zurückgesetzt wird.

Wenn beim Detektieren der Zustandsänderung eines aktivierbaren Busteilnehmers eine Meldung erfolgt, kann auch ohne ständiges Auslesen der ganzen Liste sofort auf die Nichtansprechbarkeit des einen Busteilnehmers reagiert werden.

Wenn beim Detektieren der Zustandsänderung die Informationen über diesen anderen aktivierbaren Busteilnehmer, vorzugsweise die ganze Liste, automatisch gemeldet wird, stehen die gemeldeten Informationen dem registrierenden Teilnehmer bzw. dem Anwender sofort zur Verfügung.

Weitere Vorteile und Einzelheiten ergeben sich aus der nachfolgenden Beschreibung eines Ausführungsbeispiels und den Figuren. Dabei zeigen:
FIG 1 ein Kommunikationssystem und
FIG 2 die Teilnehmerliste.

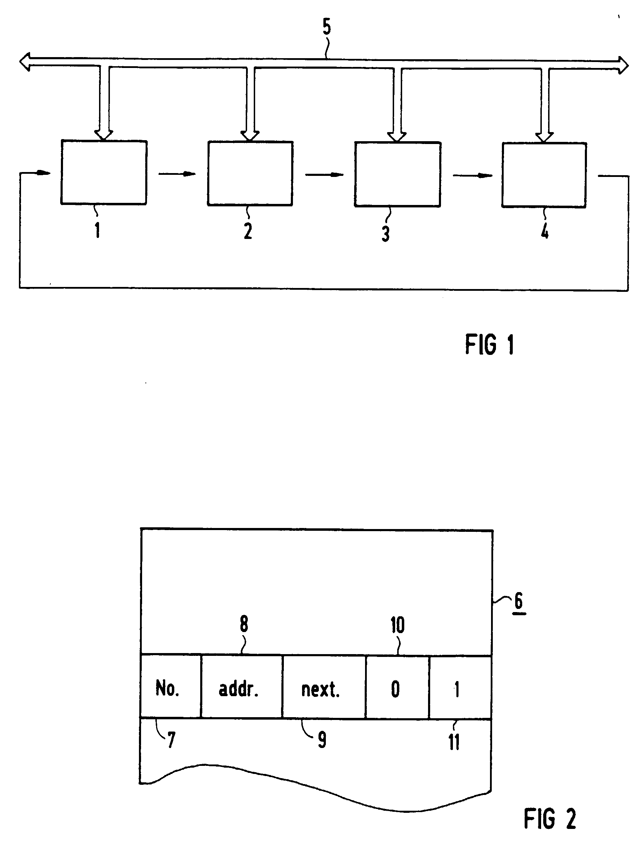

Gemäß FIG 1 besteht das Kommunikationssystem aus als Busmaster aktivierbaren Busteilnehmern 1 bis 4 sowie weiteren, der Übersichtlichkeit halber nicht dargestellten Busteilnehmern, die über den Bus 5 miteinander verbunden sind. Die Busteilnehmer 1 bis 4 sind beispielsweise Automatisierungsgeräte.

Von den Busteilnehmern 1 bis 4 ist stets nur einer aktiviert, momentan z.B. der Busteilnehmer 2. Der Busteilnehmer 2 verwaltet also den Bus 5. Nach einer gewissen Zeit gibt der Busteilnehmer 2 den Token weiter, d.h. er sendet ein Aktivierungssignal an den Busteilnehmer 3. Der Busteilnehmer 3 quittiert dieses Aktivierungssignal, d.h. er übernimmt den Token und wird dadurch zum Busmaster. Daraufhin deaktiviert sich der Busteilnehmer 2.

Der Busteilnehmer 3 verfährt in ähnlicher Weise wie der Busteilnehmer 2, verwaltet also den Bus 5, aktiviert später den Teilnehmer 4 und deaktiviert sich selbst. Die Aktivierung der aktivierbaren Teilnehmer 1 bis 4 erfolgt dabei zyklisch, wie durch die Pfeile in FIG 1 angedeutet ist.

Jeder aktivierbare Busteilnehmer 1 bis 4 führt eine Liste, in der Informationen über die anderen aktivierbaren Busteilnehmer abgespeichert sind. In FIG 2 ist beispielhaft die Liste 6 des Busteilnehmers 1 dargestellt. Die Liste 6 weist für jeden anderen aktivierbaren Busteilnehmer 2 bis 4 Listeneinträge 7 bis 11 auf, wobei die einzelnen Listeneinträge folgende Bedeutung haben:
- Der Listeneintrag 7 gibt die laufende Nummer des Listeneintrags an;
- der Listeneintrag 8 gibt die Adresse an, unter der der andere aktivierbare Busteilnehmer ansprechbar ist;
- der Listeneintrag 9 gibt die Adresse bzw. die laufende Nummer des Listeneintrags des Busteilnehmers an, an den der Token von dem Busteilnehmer mit der Adresse gemäß Listeneintrag 8 weitergegeben werden soll;
- das Bit 10 ist ein Statusbit, das anzeigt, ob der betreffende Busteilnehmer bei der letzten Tokenübergabe den Token quittiert hat;
- das Bit 11 ist ein Änderungsbit, das anzeigt, ob sich das Statusbit 10 seit dem letzten Auslesen der Listeneinträge 7 bis 11 des betreffenden Busteilnehmers geändert hat.

Eine Tokenübergabe wird von allen aktivierbaren Busteilnehmern 1 bis 4 mitgehört. Wenn die Übergabe des Tokens z.B. vom Busteilnehmer 2 an den Busteilnehmer 3 scheitert, gibt der Busteilnehmer 2 den Token direkt an den Busteilnehmer 4 weiter. Das Scheitern der Übergabe des Tokens an den Busteilnehmer 3 wird vom Busteilnehmer 1 registriert. Der Busteilnehmer 1 setzt daraufhin für den Busteilnehmer 3 das Statusbit 10 auf "nicht aktivierbar" und das Änderungsbit 11 auf "Zustand geändert". Wenn die nächste Übergabe des Tokens vom Busteilnehmer 2 an den Busteilnehmer 3 gelingt, wird das Statusbit 10 zurückgesetzt, das Änderungsbit 11 dagegen bleibt gesetzt. Das Änderungsbit 11 wird erst zurückgesetzt, wenn die Informationen über den Busteilnehmer 3, vorzugsweise die gesamte Liste 6, ausgelesen und damit auswertbar wird.

Damit die Nichtansprechbarkeit des Busteilnehmers 3 möglichst schnell beim weiteren Verhalten des Busteilnehmers 1 berücksichtigt wird, erfolgt vorzugsweise innerhalb des Busteilnehmers 1 eine Meldung an eine übergeordnete Einheit, z.B. von einem Kommunikationsprozessor an eine Zentraleinheit. Zusammen mit der Meldung als solcher kann gleichzeitig auch der Inhalt der Liste 6 bzw. der relevante Inhalt der Liste 6, also die Informationen über den Busteilnehmer 3, an diese übergeordnete Einheit gemeldet werden. Das Änderungsbit 11 wird dabei nach dem Melden der Informationen zurückgesetzt.

## Patentansprüche

1. Überwachungsverfahren für die Busteilnehmer (1-4) eines Bussystems (5), wobei zumindest ein Teil (1-4) der Busteilnehmer (1-4) aktivierbar ist und wobei in jedem aktivierbaren Busteilnehmer (z.B. 1) eine zumindest durch diesen Busteilnehmer (1) auslesbare Liste (6) mit Informationen zumindest über die anderen aktivierbaren Busteilnehmer (2-4) geführt wird, **dadurch gekennzeichnet**,
- daß die Informationen über die anderen aktivierbaren Busteilnehmer (2-4) pro anderem aktivierbaren Busteilnehmer (3) zumindest
a) eine Statusinformation (10), die den Status des anderen aktivierbaren Busteilnehmers (3) in Bezug auf seine Aktivierbarkeit anzeigt, und
b) eine Änderungsinformation (11), die eine Änderung der Statusinformation (10) dieses anderen aktivierbaren Busteilnehmers (3) seit dem letzen Auslesen anzeigt und beim Detektieren einer Änderung des Statuses dieses anderen aktivierbaren Busteilnehmers (3) in Bezug auf seine Aktivierbarkeit gesetzt wird,
beinhalten,
- daß die Änderungsinformation (11) erst nach dem Auslesen zumindest der Informationen über diesen anderen aktivierbaren Busteilnehmer (3), vorzugsweise der ganzen Liste (6) zurückgesetzt wird.

2. Überwachungsverfahren nach Anspruch 1, **dadurch gekennzeichnet**, daß beim Detektieren der Zustandsänderung eine Meldung an eine übergeordnete Einheit erfolgt.

3. Überwachungsverfahren nach Anspruch 1 oder 2, **dadurch gekennzeichnet**, daß beim Detektieren der Zustandsänderung des anderen Busteilnehmers (3) die Information über diesen anderen Busteilnehmer (3), vorzugsweise die ganze Liste (6), automatisch an eine übergeordnete Einheit gemeldet wird.

4. Überwachungsverfahren nach Anspruch 1, 2 oder 3, **dadurch gekennzeichnet**, daß es bei einem Token Ring angewendet wird.

## Claims

1. Monitoring method for the bus participants (1-4) of a bus system (5), whereby at least one portion (1-4) of the bus participants (1-4) can be activated and whereby each bus participant which can be activated (for example 1) carries a list (6), which can be read at least by this bus participant (1), with information at least on the other bus participants (2-4) which can be activated, characterized in that
- the information on the other bus participants (2-4) which can be activated for the other bus participant (3) which can be activated contains at least
a) status information (10) which displays the status of the other bus participant (3) which can be activated with respect to its ability to be activated, and
b) an item of change information (11) which displays a change of the status information (10) of this other bus participant (3), which can be activated, since the last reading and, upon detection of a change of the status of this other bus participant (3), which can be activated, with respect to its ability to be activated, is set,
- in that the change information (11) is reset only after the reading of at least the information on this other bus participant (3) which can be activated, preferably of the entire list (6).

2. Monitoring method according to claim 1, characterized in that, upon the detection of the state change, there is a signal to a higher-level unit.

3. Monitoring method according to claim 1 or 2, characterized in that, upon the detection of the state change of the other bus participant (3), the information on this other bus participant (3), preferably the entire list (6), is automatically signalled to a higher-level unit.

4. Monitoring method according to claim 1, 2 or 3, characterized in that it is used with a token ring.

## Revendications

1. Procédé de surveillance des participants (1 à 4) au bus d'un système (5) de bus, au moins une partie (1 à 4) des participants (1 à 4) au bus pouvant être activés et, dans chaque participant (par exemple 1) au bus pouvant être activé, une liste (6) comportant des informations au moins sur les autres participants (2 à 4) au bus pouvant être activés et pouvant être lue par ce participant (1 ) au bus étant établit, caractérisé en ce que
- les informations concernant les autres participants (2 à 4) au bus contiennent pour chaque autre participant (3) au bus pouvant être activés au moins
a) une information (10) d'état, qui indique l'état du point de vue de la capacité à être activée de l'autre participant (3) au bus pouvant être activé, et
b) une information (11) de changement, qui indique un changement de l'information (10) d'état de cet autre participant (3) au bus pouvant être activé depuis la dernière lecture et qui est mise en cas de détection d'un changement de l'état du point de vue de la capacité à être activée de cet autre participant (3) au bus pouvant être activé,
- l'information (11) de changement n'est remise à l'état initial qu'après la lecture au moins des informations concernant cet autre participant (3) pouvant être activé, de préférence de toute la liste (6).

2. Procédé de surveillance suivant la revendication 1, caractérisé en ce qu'il s'effectue lors de la détection du changement d'état un avertissement adressé à une unité de rang supérieur.

3. Procédé de surveillance suivant la revendication 1 ou 2. caractérisé en ce que, lors de la détection du changement d'état de l'autre participant (3) au bus, l'information concernant cet autre participant (3) au bus, de préférence toute la liste (6), est signalé automatiquement à une unité de rang supérieur.

4. Procédé de surveillance suivant la revendication 1,2 ou 3. caractérisé en ce qu'il est utilisé dans un anneau à jeton.
